# EUROPEAN PATENT SPECIFICATION

(11) **EP 2 182 279 B1**
(45) Date of publication and mention of the grant of the patent: **14.12.2016**
(21) Application number: 09174383.1
(22) Date of filing: 28.10.2009
(51) Int. Cl.: F23C 9/00, F23L 7/00

(54) **Oxyfuel boiler system and method of controlling the same**
Oxyfuel-Kesselsystem und Steuerungsverfahren dafür
Système de chaudière à oxy-fuel et son procédé de contrôle

(30) Priority: 31.10.2008 JP 2008280675
(43) Date of publication of application: 05.05.2010
(73) Proprietor: Mitsubishi Hitachi Power Systems, Ltd., Yokohama 220-8401 (JP)
(72) Inventor: Shibata, Tsuyoshi, Chiyoda-ku Tokyo 100-8220 (JP); Hayashi, Yoshiharu, Chiyoda-ku Tokyo 100-8220 (JP); Yamada, Akihiro, Chiyoda-ku Tokyo 100-8220 (JP); Taniguchi, Masayuki, Chiyoda-ku Tokyo 100-8220 (JP)
(74) Representative: MERH-IP Matias Erny Reichl Hoffmann Patentanwälte PartG mbB

(56) References cited:
- US-A1- 2002 009 399
- US-A1- 2008 006 188
- US-A1- 2008 160 464

## Description

### FIELD OF THE INVENTION

The present invention relates to an oxyfuel boiler system and a method of controlling the same.

### BACKGROUND OF THE INVENTION

A coal firing power generation system configured with a pulverized coal firing boiler and a steam turbine electric generator plays a significant role, given the recent years' price increase of natural gas and the like resulting from oil supply shortage and increase of natural gas demand.

As a means to greatly reduce CO₂ emissions from the coal firing power generation system, oxyfuel boiler systems have been proposed.

Japanese Unexamined Patent Application Publication No. 2007-147162 discloses a technology for adjusting oxygen concentration in the total gas introduced to a boiler main body by controlling recirculation flow rate of combustion exhaust gas so that the heat absorbing amount of the boiler main body becomes the target heat absorbing amount.

However, in Japanese Unexamined Patent Application Publication No. 2007-147162, no consideration is given on reduction of fuel NOₓ.

In US 2008/160464 A1, a method for generating heat energy is described, wherein the method includes injecting a stream having a concentration of at least 50% oxygen (02 stream) into a primary gas stream through a mixer, the mixer discharging the 02 stream as two or more spaced jets traversing the primary stream, thereby enriching the primary gas stream. The method further includes mixing fuel with the enriched primary gas stream, thereby forming a fuel stream; and combusting the fuel stream, thereby forming a flue gas stream.

In US 2008/006188 A, a fuel-fired steam generation apparatus such as a boiler is described. The boiler can produce steam at a rate higher than the maximum rate at which it can produce steam using air as the only source of oxygen for combustion, by combusting the fuel with oxidant having a higher oxygen content than air but feeding the oxidant at a volumetric flow rate lower than the rate at which maximum steam production is obtained with air as the only source of oxygen for combustion.

In view of above, an object of the present invention is to provide an oxyfuel boiler system and a method of controlling the same capable of further reducing the forming amount of the fuel NOₓ.

### SUMMARY OF THE INVENTION

It is provided an oxyfuel boiler system in which an exhaust gas tapping port is arranged downstream of a dry dust-removing apparatus arranged in a flue, and there is provided an oxygen controlling apparatus for making a concentration of oxygen to be supplied to an after-gas port lower than that of oxygen to be supplied to a burner. More specifically, the present invention provides an oxyfuel boiler system as laid out in claim 1.

### BRIEF DESCRIPTION OF THE DRAWING

Fig. 1 illustrates configuration of an oxyfuel boiler system according to a first embodiment;
Fig. 2 illustrates configuration of an oxyfuel boiler system according to a second embodiment;
Fig. 3 illustrates configuration of an oxyfuel boiler system according to a third embodiment;
Fig. 4 illustrates configuration of an oxyfuel boiler system according to a fourth embodiment;
Fig. 5 illustrates an example of a calculation result of reductive combustion zone temperature of a boiler in the first embodiment; and
Fig. 6 illustrates an example of a calculation result of oxidative combustion zone temperature of a boiler in the first embodiment.

### DETAILED DESCRIPTION OF THE PREFERRED EMBODIMENTS

Oxyfuel boiler systems according to respective embodiments will be described below referring to the accompanying drawings. However, the present invention is not limited to those embodiments.

Meaning of each reference numeral in the description below is as follows.

1: Boiler, 2: NOₓ removing apparatus, 3: Heat exchanger, 4: Dry dust-removing apparatus, 5: Wet desulfurization apparatus, 6: Wet dust-removing apparatus, 7: Moisture removing cooler, 8: CO₂ separation and liquefaction apparatus, 9: Discharge stack, 10: Oxygen generator, 11: Coal mill, 12: Burner, 13: After-gas port, 14: Recirculation gas supply pipe, 14a: Primary gas pipe, 14b: Secondary gas pipe, 14c: After-gas pipe, 15: Nitrogen gas transfer pipe, 16: Oxygen supply pipe, 17: Recirculation exhaust gas moisture removing cooler, 19: Coal supply pipe, 20: Flue, 21, 21a, 21b: Recirculation fan, 22, 22a, 22b: Exhaust gas tapping port, 23: Oxygen and recirculation gas flow controller, 24: Oxygen analyzer, and 25: Oxygen controlling apparatus for oxidizer.

### (First Embodiment)

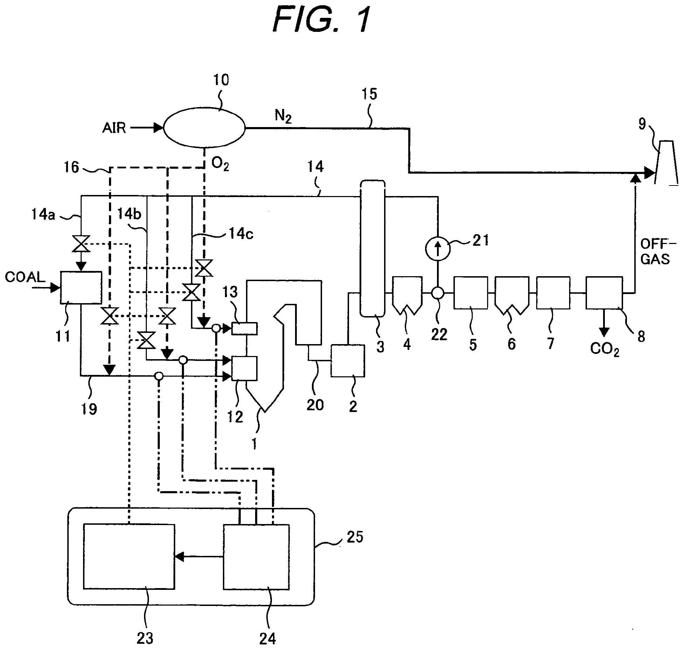

Fig. 1 illustrates a configuration of an oxyfuel boiler system. Fuel coal is supplied to a coal mill 11 via a coal transfer device and is pulverized to a particle size suitable for pulverized coal firing. The pulverized coal (powdered coal) is supplied to a burner 12 through a coal supply pipe 19. The coal mill 11 is connected with a primary gas pipe 14a which supplies recirculation exhaust gas to the coal mill 11. An oxygen supply pipe 16 is connected to a location along the coal supply pipe 19, where oxygen is mixed as needed. Mixing of a proper amount of oxygen with the recirculation exhaust gas in the coal supply pipe 19 has the effect of enhancing the ignition performance of the coal in the burner 12.

An oxygen generator 10 separates oxygen from air and supplies oxygen to the coal supply pipe 19 and the like through the oxygen supply pipe 16. A great deal of nitrogen gas generated in separation of oxygen is diffused from a discharge stack 9 by a nitrogen gas transfer pipe 15.

The burner 12 is provided with a secondary gas pipe 14b, which is a recirculation gas supply pipe, and the oxygen supply pipe 16 is connected to the secondary gas pipe 14b. Also, the burner 12 ejects gas mixture of the oxygen supplied from the oxygen supply pipe 16 and the recirculation exhaust gas to a furnace. Further, the burner 12 also ejects the pulverized coal supplied from the coal supply pipe 19 to the furnace and forms a flame by the pulverized coal and the gas mixture.

An after-gas port 13 is arranged downstream of the burner 12, and the recirculation gas supply pipe 14 is connected to the after-gas port 13 as well through an after-gas pipe 14c. Also, the oxygen supply pipe 16 is connected to the after-gas supply pipe 14c as well. Further, independently of the burner 12, the after-gas port 13 also feeds the gas mixture of the oxygen and the recirculation gas to a boiler 1.

The after-gas port 13 has a function similar to that of the after-air port of an air fired boiler. That is, by properly regulating the flow amounts of the gas mixture and the oxygen concentration supplied to the burner 12 and the after-gas port 13, a burning zone of reductive atmosphere is formed in the boiler 1, thus reducing the rate of conversion of the nitrogen in the coal to NOₓ. Also, by the oxygen contained in the gas supplied from the after-gas port 13, a burning zone of oxidative atmosphere is formed in the upper part of the boiler. Further, the jet exiting from the after-gas port 13 promotes gas mixing in the boiler and reduces unburned portion remaining in the exhaust gas of the boiler.

The flow rates of the recirculated exhaust gases supplied to the coal mill 11, burner 12, and after-gas port 13 can each be regulated independently by a flow rate regulator attached to the primary gas pipe 14a, secondary gas pipe 14b, and after-gas pipe 14c respectively. Further, the oxygen supply pipe 16 also has separate flow regulators in its branches for regulating the supply amount to the branches. These three recirculation gas supply pipes 14 are connected with gas sampling pipes for measuring each oxygen concentration.

An oxygen controlling apparatus 25 for oxidizer comprises an oxygen and recirculation gas flow controller 23 and an oxygen analyzer 24. The oxygen analyzer 24 can always measure the oxygen concentration in the gas mixture in each pipe taken by a gas sampling pipe. The oxygen and recirculation gas flow controller 23 can regulate the recirculation gas flow rate and the oxygen flow rate of the three recirculation gas supply pipes 14 independently. Also, the oxygen and recirculation gas flow controller 23 can automatically control the oxygen concentration using the oxygen concentration measured value from the oxygen analyzer 24 as an input signal. That is, with this controller, for the gas mixture supplied to the boiler 1 from the coal supply pipe 19, secondary gas pipe 14b, after-gas pipe 14c, the distribution ratio of the oxygen feeding amount and oxygen concentration can be set/regulated independently.

High temperature and high pressure steam generated in the boiler 1 is supplied to a steam turbine generating system and is converted to electric power.

Exhaust gas generated in the boiler 1 is introduced to a flue 20 and supplied to an NOₓ removing apparatus 2, and the NOₓ component in the exhaust gas is reduced. In the flue 20, an exhaust gas treatment system comprising a plurality of apparatuses treating the exhaust gas is provided in addition to the NOₓ removing apparatus 2. However, when the forming amount of NOₓ can be sufficiently reduced by improvement of the combustion method and the like, the NOₓ removing apparatus 2 may be omitted. The exhaust gas exited from the NOₓ removing apparatus 2 is supplied to a heat exchanger 3 and the temperature is reduced. Heat recovered from the exhaust gas by the heat exchanger 3 is given to the recirculation exhaust gas supplied similarly to the heat exchanger 3 for recirculating to the boiler 1 and inhibits deterioration of thermal efficiency of the plant. The exhaust gas exited from the heat exchanger 3 is introduced to a dry dust-removing apparatus 4, and 95% or more of the dust component is removed.

An exhaust gas tapping port 22 is disposed downstream of the dry dust-removing apparatus 4. A part of the exhaust gas taken in from the exhaust gas tapping port 22 is induced to a recirculation gas supply pipe 14 by a recirculation fan 21 and is heated by the heat exchanger 3. The exhaust gas is thereafter supplied to the coal mill 11, burner 12 and after-gas port 13 as described above.

95% or more of SO₂ of the exhaust gas not recirculated is removed by a wet desulfurization apparatus 5. Then, the exhaust gas is removed of 98% or more of SO₃ component by a wet dust-removing apparatus 6, and the moisture content in the exhaust gas is substantially reduced by a moisture removing cooler 7. Further, in the present embodiment, with respect to the removing apparatus for dust and sulfur compound in the exhaust gas such as the dry dust-removing apparatus, wet desulfurization apparatus, and wet dust-removing apparatus, decision on necessity or non-necessity of installation and alteration of specification of the removal rate may be made at a designer's discretion. Also, an apparatus with a similar function such as a dry desulfurization apparatus maybe installed as an alternative.

The CO₂ concentration of the exhaust gas exiting from the moisture removing cooler 7 becomes approximately 90% or more. Therefore, a CO₂ separation and liquefaction apparatus 8 can separate and liquefy CO₂ in the exhaust gas easily. Also, the separated CO₂ may be supplied to a user through a pipe line and the like as high-pressure gas. The balance not liquefied by the CO₂ separation and liquefaction apparatus 8 is discharged as off-gas. Main components of the off-gas are nitrogen and oxygen, and minor components of NOₓ and the like and some amount of CO₂ are contained. The off-gas is mixed with a great deal of nitrogen generated by the oxygen generator 10, and is diffused to the atmosphere from the discharge stack 9.

Here, the basic principle of the oxyfuel boiler system will be described. An ordinary coal firing boiler uses air as oxidizer gas, whereas the oxyfuel boiler uses the gas mixture in which major portion of the combustion exhaust gas is taken out from a location along the flue and is mixed thereafter with high purity oxygen generated by the oxygen generator for regulating the oxygen concentration as the oxidizer gas. Thus, final exhaust gas flow rate discharged from the plant is reduced to approximately 1/4th compared with other ordinary systems. Further, because the CO₂ concentration of the exhaust gas rises massively, CO₂ can be separated and recovered from the exhaust gas easily.

For CO₂ emission-free coal-firing oxyfuel boiler system, the main technical objectives are summarized as follows:
(1) To suppress reduction in power generation efficiency resulting from energy consumption in the oxygen generator and CO₂ separator.
(2) To establish a plant control method by which the plant can stably respond to various conditions such as starting, stopping and changing loads, and realize the stable operation by cooperation with peripheral facilities (such as oxygen generator and a CO₂ separator).
(3) To achieve stable burning performance and suppress the formation of trace harmful substance when burning coal with an oxidizer mixture gas of recirculation exhaust gas and oxygen.
(4) To prevent various problems arising from increased concentrations of components contained in the various exhaust gas resulting from introduction of a configuration in which a large amount of the exhaust gas is recirculated.

The present embodiment relates mainly to the item (3) above, and is objected to solve the problems related to inhibit the forming amount of NOₓ which is the trace harmful substance. Below, the features of the oxyfuel boiler system and the problems related to NOₓ reduction will be described.

If CO₂ recovery from exhaust gas is the only obj ect, burning coal exclusively with oxygen is an effective way. When coal is burned exclusively with oxygen, the major components of the exhaust gas are CO₂ and H₂O. Therefore, by separating and removing the H₂O from the exhaust gas, for example, by cooling the exhaust gas, CO₂ of a high concentration can be readily collected. However, when coal is burned with oxygen only, the temperature of the burning flame is higher than those in air fired boiler system by 500 °C or higher. Therefore, when this oxygen firing is employed in a coal firing plant, expensive heat resistant steels need to be used for metal materials constituting the boiler. Another problem is that the oxidizer gas jet velocity in the burner is relatively low, thus making it difficult to form a stable flame. Also, the amount of the exhaust gas generated is less than 1/4th of those in air firing, and therefore the velocity of the exhaust gas flowing through the heat transfer tube of the boiler is extremely slower. Accordingly, the thermal transfer efficiency degrades and the thermal recovery becomes difficult.

To overcome above problems, the oxyfuel boiler system employs an exhaust gas recirculation system in which a large amount of the exhaust gas is recirculated, mixed with oxygen, and then supplied to the boiler. Specifically, such system is designed so that the flow rate of the oxidizer gas supplied to the burner and the flow rate of the exhaust gas flowing through the boiler are not less than approximately 70% of the flow rate of the air in an air fired boiler. In this manner, high efficiency thermal recovery and electric power generation can be stably achieved without greatly modifying a conventional air fired boiler system.

In the oxyfuel boiler system with such basic configuration, the problems related to NOₓ reduction are as below.

In the oxyfuel boiler system, nitrogen (N₂) concentration in the exhaust gas is maintained extremely low. Therefore, thermal NOₓ formed by reaction of N₂ and oxygen (O₂) in the high temperature zone in the upper part of the boiler is suppressed greatly. As a result, the NOₓ forming amount per unit supplied heat amount can be reduced compared with those in the air fired boiler. Accordingly, in order to further reduce the NOₓ forming amount in the oxyfuel boiler system, the forming amount of fuel NOₓ generated by oxidation of N portion in coal needs to be suppressed.

The reaction pathway that forms the fuel NOₓ from N portion in coal is considered to be an oxidation reaction of ammonia (NH₃) and cyanogen (HCN) generated from the coal. The mechanism of the oxidation reaction of NH₃ and HCN is different in the reductive combustion zone with extremely low O₂ concentration and in the oxidative combustion zone with high O₂ concentration. OH radical mainly contributes to oxidation in the reductive combustion zone, whereas oxidation rests upon O₂ in the oxidative combustion zone. Accordingly, how these oxidation reaction rates are suppressed according to the atmosphere of the combustion zone is a key point for the fuel NOₓ reduction.

Also, as a factor affecting NOₓ formation from NH₃ and HCN, the temperature of the combustion zone is also important in addition to the O₂ concentration and the OH radical concentration described above. In the reductive combustion zone, as the combustion temperature becomes higher, the forming rate of the fuel NOₓ lowers. The reason is considered that the reaction in which the NOₓ generated in the reductive combustion zone reacts with coal, NH₃, HCN and the like again and is reduced to N₂ is promoted in a field with higher temperature. On the other hand, in the oxidative combustion zone, as the combustion temperature becomes lower, the forming rate of the fuel NOₓ lowers. The reason is that, out of NH₃, HCN formed in the reductive combustion zone in the lower part of the boiler, those remaining until the oxidative combustion zone in the upper part of the boiler are oxidized in this zone, and the N portion contained is converted to NOₓ or N₂, where, when the combustion temperature of the oxidative combustion zone is higher, conversion rate to NOₓ rises, whereas when the combustion temperature is lower, conversion rate to N₂ rises.

To summarize above, in order to suppress formation of the fuel NOₓ in the oxyfuel boiler system, it is necessary to lower the OH radical concentration in the reductive combustion zone to the most and to raise the combustion temperature. Also, it is required to lower the O₂ concentration in the oxidative combustion zone while controlling the combustion temperature lower.

In this connection, in the present embodiment, the oxygen controlling apparatus 25 for oxidizer is provided with a function of regulating the recirculation gas amount supplied to the coal mill 11, which is a coal supply apparatus, burner 12, and after-gas port 13 and setting the O₂ concentration of the oxidizer gas independently.

In the air fired type coal firing boiler, the air excess ratio at the boiler outlet is made approximately 1.15, and the distribution ratio of the combustion air amount supplied to the burner and the combustion air amount supplied to the after-air port is made approximately 0.8:0.35. Therefore, NOₓ and unburned portion can be reduced with a good balance. Regulating air excess ratio/distribution ratio of the combustion air amount is equivalent with regulating oxygen excess ratio/distribution ratio of the oxygen contained in the air. Therefore, in the oxyfuel boiler also, it is preferable to set the oxygen amount supplied to the burner and the oxygen amount supplied to the after-gas port as well as the oxygen excess ratio at the furnace outlet using the condition described above for the air firing case. That is, in the present embodiment, the total oxygen amount supplied to the boiler is set to approximately 1.15 times of the oxygen amount required for complete combustion of coal. Also, the distribution ratio of the oxygen amount supplied to the burner 12 and the oxygen amount supplied to the after-gas port 13 is made approximately 0.8:0.35.

In addition, the oxygen controlling apparatus 25 for oxidizer also has a function of regulating the recirculation gas amount supplied to the burner 12 and after-gas port 13. Furthermore, the oxygen controlling apparatus 25 for oxidizer sets the O₂ concentration of the oxidizer gas independently. Specifically, the oxygen controlling apparatus 25 for oxidizer makes the concentration of the oxygen supplied to the after-gas port lower than the concentration of the oxygen supplied to the burner. With respect to the regulation target for the O₂ concentration, following values are appropriate.

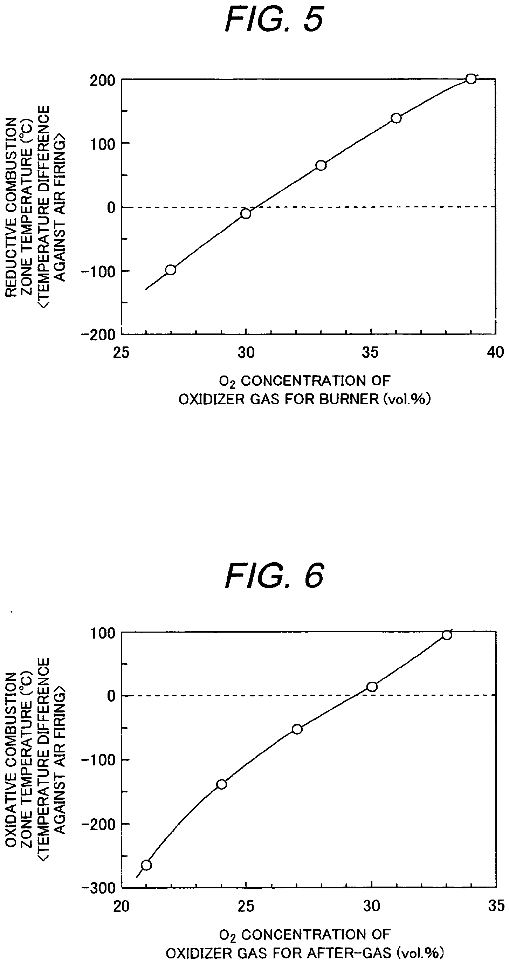

It is preferable to set the O₂ concentration of the oxidizer gas in the coal supply pipe 19 and the secondary gas pipe 14b connected to the burner between 32% and 36%. Fig. 5 illustrates a calculation result of the combustion temperature in the reductive combustion zone in the boiler 1 in accordance with the present embodiment. In order to obtain the combustion temperature similar to that of the air firing, the O₂ concentration of approximately 30% is needed. Also, it was found that the combustion temperature rose with the increase of the O₂ concentration of the oxidizer gas. As described above, in the reductive combustion zone, the forming rate of the fuel NOₓ lowers with the rise of the combustion temperature. Therefore, in order to obtain a stable high temperature flame, O₂ concentration can be made 32% or more.

On the other hand, when the combustion temperature rises by 150 °C or higher if compared with the time of the air firing, problems occur in the heat resistance performance of the burner and boiler water tube material. Therefore, from this viewpoint, the O₂ concentration should be 36% or less. Based on the above study, in order to reduce the forming amount of the fuel NOₓ, the O₂ concentration of the oxidizer gas supplied to the burner can be set in the range between approximately 32% and 36%.

Next, the O₂ concentration of the oxidizer gas in the after-gas pipe 14c connected to the after-gas port can be set between 26% and 28%. Fig. 6 illustrates a calculation result of the combustion temperature in the oxidative combustion zone in the boiler 1 in accordance with the present embodiment. By making the O₂ concentration 30%, the combustion temperature approximately similar to that in the air firing can be obtained. As described above, in the oxidative combustion zone, forming rate of the fuel NOₓ lowers with the lowering of the combustion temperature. Therefore, in order to obtain a stable temperature lowering effect, the O₂ concentration can be made 28% or less.

On the other hand, when the combustion temperature lowers by 100 °C or higher, there is a risk that the concentration of the unburned portion at the boiler outlet rises exceeding an allowable range. Therefore, the O₂ concentration should be made 26% or more. Based on the above study, in order to reduce the forming amount of the fuel NOₓ, the O₂ concentration of the oxidizer gas supplied to the after-gas port can be set in the range between 26% and 28%.

Because the CO₂ emission-free oxyfuel boiler system in accordance with the present embodiment can reduce the forming amount of the fuel NOₓ generated in the combustion, NOₓ reduction effect can be further enhanced. Also, the harmful component emitted to the atmosphere can be reduced substantially. Thus, the apparatuses related to NOₓ removal in an exhaust gas treatment system can be substantially miniaturized and simplified, and also the utilities cost of the ammonia solution and the like required for their operation can be reduced.

Further, setting value of the appropriate O₂ concentration changes also according to the distribution ratio of the oxygen, oxygen excess ratio, boiler structure, kind of coal, and the like. Therefore, the setting value should be decided after each case is assessed, and the values of the appropriate O₂ concentration setting range described above does not limit the scope of the present embodiment.

### (Second Embodiment)

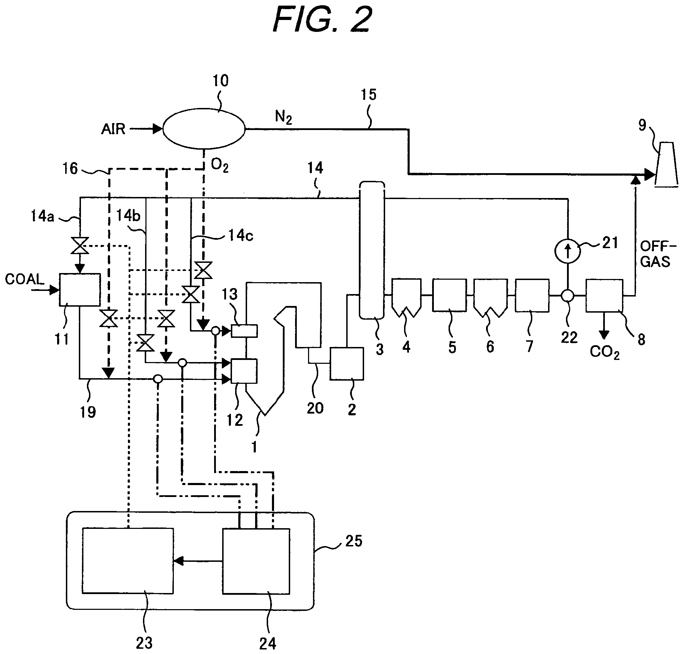

Fig. 2 illustrates a schematic diagram of the oxyfuel boiler system in accordance with the present embodiment.

Because the present embodiment comprises many sections constituted of apparatuses having the similar actions as those of the first embodiment, only the points different from the first embodiment will be described below. The apparatuses not described below have the similar action and effect as the first embodiment.

The point of the present embodiment different from the first embodiment is that the exhaust gas tapping port 22 is disposed downstream of the moisture removing cooler 7, and the recirculation exhaust gas removed with the dust and moisture can be supplied to the boiler. The moisture removing cooler 7 serves as amoisture removing apparatus. In the configuration in accordance with the first embodiment, the moisture density in the recirculation exhaust gas is approximately 30%. On the other hand, in the configuration in accordance with the present embodiment, the moisture density in the recirculation exhaust gas can be made 5% or less. Because the moisture density in the recirculation exhaust gas lowers, the moisture amount supplied from the burner also decreases. Therefore, OH radical concentration derived from the moisture in the reductive combustion zone greatly lowers. As described above, lowering of the OH radical concentration in the reductive combustion zone is effective in reduction of the fuel NOₓ.

Thus, with the configuration in accordance with the present embodiment, the NOₓ reduction effect greater than that of the first embodiment can be obtained.

### (Third Embodiment)

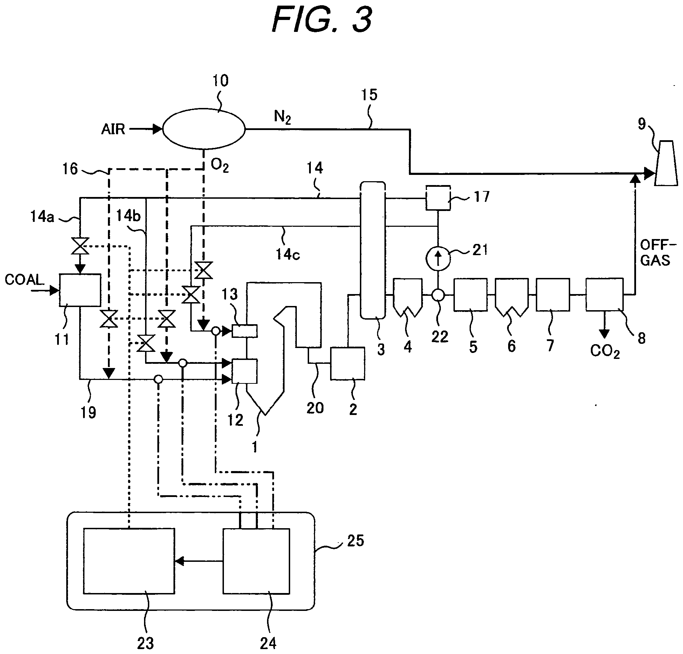

Fig. 3 illustrates a schematic diagram of the oxyfuel boiler system in accordance with the third embodiment.

Because the present embodiment comprises many sections constituted of apparatuses having the similar actions as those of the first embodiment and the second embodiment, only the points different from the first embodiment and the second embodiment will be described below. The apparatuses not described below have the similar action and effect as the said embodiments.

The configuration of the present embodiment is similar to the first embodiment in that the exhaust gas tapping port 22 is disposed downstream of the dry dust-removing apparatus 4 and upstream of the other exhaust gas treatment apparatuses. However, the configuration is different in that the recirculation gas supply pipe 14 branches to two lines before entering the heat exchanger 3. Out of the recirculation gas supply pipes that branched, the first line is connected to the primary gas pipe 14a and the secondary gas pipe 14b through the heat exchanger 3 after the moisture in the gas is removed through the recirculation exhaust gas moisture removing cooler 17. Out of the recirculation gas supply pipes that branched, the second line is connected to the after-gas pipe 14c through the heat exchanger 3 without removing the moisture.

With the configuration in accordance with the present embodiment, similar to the second embodiment, the OH radical concentration in the reductive combustion zone is substantially reduced. Also, the moisture in the recirculation exhaust gas supplied to the after-gas port which does not affect the NOₓ reduction is not removed. Therefore, the thermal loss of the recirculation exhaust gas supplied to the after-gas port decreases, and the total capacity of the moisture removing cooler 7 and the recirculation exhaust gas moisture removing cooler 17 can be reduced. Also, when the wet desulfurization apparatus and the wet dust-removing apparatus are arranged like in the case of the present embodiment, the gas amount flowing through these apparatuses becomes less than 1/4th of that of the second embodiment, therefore the apparatuses can be miniaturized.

Accordingly, with the present embodiment, the oxyfuel boiler system having the NOₓ reduction effect greater than that of the first embodiment and with the improved thermal efficiency and with the miniaturized apparatuses when compared with the second embodiment can be realized.

### (Fourth Embodiment)

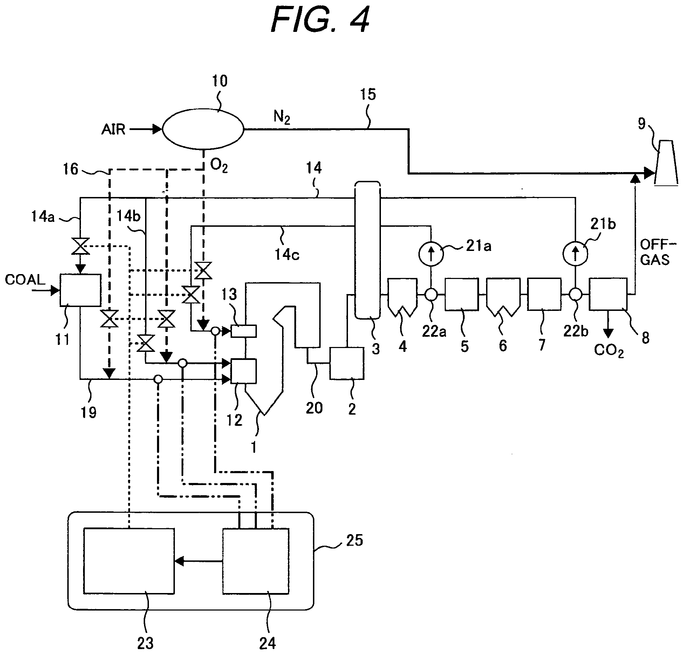

Fig. 4 illustrates a schematic diagram of the oxyfuel boiler system in accordance with the fourth embodiment.

Because the present embodiment comprises many sections constituted of apparatuses having the similar actions as those of the third embodiment, only the points different from the third embodiment will be described below. The apparatuses not described below have the similar action and effect as the third embodiment.

The point of the present embodiment different from the third embodiment is that the exhaust gas tapping port for the recirculation gas is arranged in two positions of an exhaust gas tapping port 22a and an exhaust gas tapping port 22b. Similar to the third embodiment, the exhaust gas tapping port 22a is disposed immediately after the dry dust-removing apparatus. The exhaust gas taken in from the exhaust gas tapping port 22a is sent out to the boiler side by a recirculation fan 21a through the heat exchanger 3, and is supplied to the after-gas pipe 14c only. Also, similar to the second embodiment, the exhaust gas tapping port 22b is disposed immediately after the moisture removing cooler 7. The exhaust gas taken in from the exhaust gas tapping port 22b is supplied to the boiler side by a recirculation fan 21b through the heat exchanger 3, and is supplied to the primary gas pipe 14a and the secondary gas pipe 14b only.

With these configurations, similar to the third embodiment, the OH radical reduction effect in the reductive combustion zone can be obtained without arranging the recirculation exhaust gas moisture removing cooler. That is, because it is not necessary to arrange the moisture removing apparatuses in two positions, layout of equipment and piping is facilitated, therefore the apparatuses can be made more simple and inexpensive.

According to the embodiments in accordance with the present invention, with configuration of a CO₂ emission-free oxyfuel boiler system, a substantial reduction of the NOₓ discharge can be realized by more simple apparatuses, therefore spread of CO₂ emission-free power generation can be promoted contributing to suppressing global warming.

## Claims

1. An oxyfuel boiler system comprising:
an oxygen generator (10) to separate oxygen from air;
a coal mill (11) to dry and pulverize coal;
a burner (12) to burn the dried and pulverized coal with oxygen generated at the oxygen generator (10);
an after-gas port (13) to which oxygen generated at the oxygen generator (10) is supplied;
a boiler (1) provided with the burner (12) and the after-gas port (13) on its wall;
a flue (20) introducing combustion exhaust gas from the boiler (1) to the outside of the boiler;
a recirculation gas supply pipe (14) having an exhaust gas tapping port (22) disposed in the midway of the flue (20) and supplying recirculation exhaust gas to the coal mill (11), the burner (12), and the after-gas port (13); and
an oxygen supply pipe (16) supplying oxygen from the oxygen generator (10) to the burner (12) and the after-gas port (13), **characterized in that**
the recirculation gas supply pipe (14) has separate flow regulators regulating flow rates of the recirculation exhaust gas supplied to the coal mill (11), the burner (12) and the after-gas port (13) independently,
the oxygen supply pipe (16) has separate flow regulators regulating flow rates of the oxygen supplied to the burner (12) and the after-gas port (13) independently,
wherein the exhaust gas tapping port (22) is disposed downstream of a dry dust-removing apparatus (4) arranged in the flue (20), and
there is provided an oxygen controlling apparatus (25) **characterised in that**
said oxygen controlling apparatus (25) is adapted to set a concentration of oxygen supplied from the oxygen generator (10) to the after-gas port (13) in a range between 26% and 28%, and to make the concentration of oxygen to be supplied to the after-gas port (13) lower than that of oxygen to be supplied from the oxygen generator (10) to the burner (12).

2. The oxyfuel boiler system according to Claim 1,
wherein the exhaust gas tapping port (22) is disposed downstream of the dry dust-removing apparatus (4) and downstream of a moisture removing cooler (7).

3. The oxyfuel boiler system according to Claim 1,
wherein the exhaust gas tapping port (22) is disposed downstream of the dry dust-removing apparatus (4) and upstream of a first moisture removing cooler, and
a second moisture removing cooler is provided in the midway of the recirculation gas supply pipe (14).

4. The oxyfuel boiler system according to Claim 1, which further comprises:
a first exhaust gas tapping port arranged in the flue (20) and disposed downstream of a dry dust-removing apparatus (4) and a second exhaust gas tapping port arranged in the flue (20) and disposed downstream of a moisture removing cooler (7);
the recirculation gas supply pipe (14) including a first line supplying exhaust gas taken in from the first exhaust gas tapping port to the after-gas port (13) and a second line supplying exhaust gas taken in from the second exhaust gas tapping port to the burner (12).

5. A method of controlling an oxyfuel boiler system comprising:
an oxygen generator (10) to separate oxygen from air;
a coal mill (11) to dry and pulverize coal;
a burner (12) to burn the dried and pulverized coal with oxygen generated at the oxygen generator (10);
an after-gas port (13) to which oxygen generated at the oxygen generator (10) is supplied;
a boiler (1) provided with the burner (12) and the after-gas port (13) on its wall;
a flue (20) introducing combustion exhaust gas from the boiler (1) to the outside;
a recirculation gas supply pipe (14) having an exhaust gas tapping port (22) disposed in the midway of the flue (20) and supplying recirculation exhaust gas to the coal mill (11), the burner (12) and the after-gas port (13); and
an oxygen supply pipe (16) supplying oxygen from the oxygen generator (10) to pipes supplying exhaust gas to the coal mill (11), the burner (12) and the after-gas port (13) by the recirculation gas supply pipe (14), wherein
the recirculation gas supply pipe (14) has separate flow regulators regulating flow rates of the recirculation exhaust gas supplied to the coal mill (11), the burner (12) and the after-gas port (13) independently,
the oxygen supply pipe (16) has separate flow regulators regulating flow rates of the oxygen supplied to the burner (12) and the after-gas port (13) independently,
wherein the method comprises the steps of:
taking exhaust gas in from downstream of a dry dust-removing apparatus (4) arranged in the flue (20);
**characterised in**
setting a concentration of oxygen supplied from the oxygen generator (10) to the after-gas port (13) in a range between 26% and 28% by the oxygen controlling apparatus (25) and making the concentration of oxygen to be supplied to the after-gas port (13) lower than that of oxygen to be supplied from the oxygen generator (10) to the burner (12).

## Patentansprüche

1. Oxyfuel-Kesselsystem, das Folgendes umfasst:
einen Sauerstoffgenerator (10), um Sauerstoff aus der Luft abzuscheiden;
eine Kohlenmühle (11), um Kohle zu trocknen und zu pulverisieren;
einen Brenner (12), um die getrocknete und pulverisierte Kohle mit dem Sauerstoff zu verbrennen, der im Sauerstoffgenerator (10) erzeugt wird;
einen Nachgaskanal (13), dem der Sauerstoff zugeführt wird, der im Sauerstoffgenerator (10) erzeugt wird;
einen Kessel (1), der auf seiner Wand mit dem Brenner (12) und mit dem Nachgaskanal (13) versehen ist;
einen Abzugskanal (20), der die Verbrennungsabgase vom Kessel (1) auf die Außenseite des Kessels einbringt;
eine Rückführungsgaszufuhrleitung (14), die einen Abgasabzweigkanal (22) aufweist, der in der Mitte des Abzugskanals (20) angeordnet ist und der der Kohlenmühle (11), dem Brenner (12) und dem Nachgaskanal (13) das Rückführungsabgas zuführt; und
eine Sauerstoffzufuhrleitung (16), die dem Brenner (12) und dem Nachgaskanal (13) den Sauerstoff vom Sauerstoffgenerator (10) zuführt,
**dadurch gekennzeichnet, dass**
die Rückführungsgaszufuhrleitung (14) getrennte Strömungsregulatoren aufweist, die die Strömungsgeschwindigkeiten des Rückführungsabgases, das der Kohlenmühle (11), dem Brenner (12) und dem Nachgaskanal (13) zugeführt wird, voneinander unabhängig regulieren,
die Sauerstoffzufuhrleitung (16) getrennte Strömungsregulatoren aufweist, die die Strömungsgeschwindigkeiten des Sauerstoffs, der dem Brenner (12) und dem Nachgaskanal (13) zugeführt wird, unabhängig voneinander regulieren,
wobei der Abgasabzweigkanal (22) stromabwärts von einer Vorrichtung (4) zum Entfernen von trockenem Staub angeordnet ist, die im Abzugskanal (20) angeordnet ist, und
eine Sauerstoffsteuervorrichtüng (25) vorgesehen ist, **dadurch gekennzeichnet, dass** die Sauerstoffsteuervorrichtung (25) ausgelegt ist, eine Konzentration des Sauerstoffs, der dem Nachgaskanal (3) vom Sauerstoffgenerator (10) zugeführt wird, in einem Bereich von 26 % bis 28 % einzustellen und zu bewirken, dass die Konzentration des Sauerstoffs, der dem Nachgaskanal (13) zugeführt werden soll, niedriger als die Konzentration des Sauerstoffs ist, der dem Brenner (12) vom Sauerstoffgenerator (10) zugeführt werden soll.

2. Oxyfuel-Kesselsystem nach Anspruch 1,
wobei der Abgasabzweigkanal (22) stromabwärts von der Vorrichtung (4) zum Entfernen von trockenem Staub und stromabwärts von einem Kühler (7) zum Entfernen von Feuchtigkeit angeordnet ist.

3. Oxyfuel-Kesselsystem nach Anspruch 1,
wobei der Abgasabzweigkanal (22) stromabwärts von der Vorrichtung (4) zum Entfernen von trockenem Staub und stromaufwärts von einem ersten Kühler zum Entfernen von Feuchtigkeit angeordnet ist, und
wobei ein zweiter Kühler zum Entfernen von Feuchtigkeit in der Mitte der Rückführungsgaszufuhrleitung (14) vorgesehen ist.

4. Oxyfuel-Kesselsystem nach Anspruch 1, das ferner Folgendes umfasst:
einen ersten Abgasabzweigkanal, der im Abzugskanal (20) angeordnet ist und der stromabwärts von einer Vorrichtung (4) zum Entfernen von trockenem Staub angeordnet ist, und einen zweiten Abgasabzweigkanal, der im Abzugskanal (20) angeordnet ist und der stromabwärts von einem Kühler zum Entfernen von Feuchtigkeit angeordnet ist;
die Rückführungsgaszufuhrleitung (14), die eine erste Leitung, die dem Nachgaskanal (13) das Abgas zuführt, das vom ersten Abgasabzweigkanal eingelassen wird, und eine zweite Leitung, die dem Brenner (12) das Abgas zuführt, das vom zweiten Abgasabzweigkanal eingelassen wird, enthält.

5. Verfahren zum Steuern eines Oxyfuel-Kesselsystems, das Folgendes umfasst:
einen Sauerstoffgenerator (10), um Sauerstoff aus der Luft abzuscheiden;
eine Kohlenmühle (11), um Kohle zu trocknen und zu pulverisieren;
einen Brenner (12), um die getrocknete und pulverisierte Kohle mit dem Sauerstoff zu verbrennen, der im Sauerstoffgenerator (10) erzeugt wird;
einen Nachgaskanal (13), dem der Sauerstoff zugeführt wird, der im Sauerstoffgenerator (10) erzeugt wird;
einen Kessel (1), der auf seiner Wand mit dem Brenner (12) und mit dem Nachgäskanal (13) versehen ist;
einen Abzugskanal (20), der die Verbrennungsabgase vom Kessel (1) auf die Außenseite des Kessels einbringt;
eine Rückführungsgaszufuhrleitung (14), die einen Abgasabzweigkanal (22) aufweist, der in der Mitte des Abzugskanals (20) angeordnet ist und der der Kohlenmühle (11), dem Brenner (12) und dem Nachgaskanal (13) das Rückführungsabgas zuführt; und
eine Sauerstoffzufuhrleitung (16), die den Leitungen, die der Kohlenmühle (11), dem Brenner (12) und dem Nachgaskanal (13) durch die Rückführungsgaszufuhrleitung (14) Abgas zuführen, den Sauerstoff vom Sauerstoffgenerator (10) zuführt, wobei
die Rückführungsgaszufuhrleitung (14) getrennte Strömungsregulatoren aufweist, die die Strömungsgeschwindigkeiten des Rückführungsabgases, das der Kohlenmühle (11), dem Brenner (12) und dem Nachgaskanal (13) zugeführt wird, voneinander unabhängig regulieren,
die Sauerstoffzufuhrleitung (16) getrennte Strömungsregulatoren aufweist, die die Strömungsgeschwindigkeiten des Sauerstoffs, der dem Brenner (12) und dem Nachgaskanal (13) zugeführt wird, voneinander unabhängig regulieren,
wobei das Verfahren die folgenden Schritte umfasst:
Einlassen von Abgas stromabwärts von einer Vorrichtung (4) zum Entfernen von trockenem Staub, die im Abzugskanal (20) angeordnet ist;
Einstellen einer Konzentration des Sauerstoffs, der dem Nachgaskanal (13) vom Sauerstoffgenerator (10) zugeführt wird, in einem Bereich von 26 % bis 28 % durch die Sauerstoffsteuervorrichtung (25) und Bewirken, dass die Konzentration des Sauerstoffs, der dem Nachgaskanal (13) zugeführt werden soll, niedriger als die Konzentration des Sauerstoffs ist, der dem Brenner (12) vom Sauerstoffgenerator (10) zugeführt werden soll.

## Revendications

1. Système de chaudière à oxy-combustible comprenant :
un générateur d'oxygène (10) pour séparer de l'oxygène de l'air ;
un broyeur à charbon (11) pour sécher et pulvériser du charbon ;
un brûleur (12) pour brûler le charbon séché et pulvérisé avec de l'oxygène généré dans le générateur d'oxygène (10) ;
un orifice pour gaz de suite (13) auquel est alimenté l'oxygène généré dans le générateur d'oxygène (10) ;
une chaudière (1) équipée du brûleur (12) et de l'orifice pour gaz de suite (12) sur sa paroi ;
un conduit (20) introduisant les gaz d'échappement de combustion depuis la chaudière (1) vers l'extérieur de la chaudière ;
un tube d'alimentation de gaz de recyclage (14) ayant un orifice de prélèvement de gaz d'échappement (22) disposé à mi-chemin du conduit (20) et alimentant des gaz d'échappement de recyclage vers le broyeur à charbon (11), le brûleur (12) et l'orifice pour gaz de suite (13) ; et
un tube d'alimentation d'oxygène (16) qui alimente de l'oxygène depuis le générateur d'oxygène (10) vers le brûleur (12) et l'orifice pour gaz de suite (13),
**caractérisé en ce que** le tube d'alimentation de gaz de recyclage (14) comprend des régulateurs d'écoulement séparés qui régulent les debits des gaz d'échappement recyclés alimentés au broyeur à charbon (11), au brûleur (12) et à l'orifice pour gaz de suite (11) de façon indépendante,
le tube d'alimentation d'oxygène (16) comprend des régulateurs d'écoulement séparés qui régulent les débits d'oxygène alimentés au brûleur (12) et à l'orifice pour gaz de suite (13) de façon indépendante, dans lequel l'orifice de prélèvement de gaz d'échappement (22) est disposé en aval d'un appareil de suppression de poussière à sec (4) agencé dans le conduit, et
il est prévu un appareil de commande d'oxygène (25),
**caractérisé en ce que**
ledit appareil de commande d'oxygène (25) est adapté à fixer une concentration en oxygène alimenté depuis le générateur d'oxygène (10) vers l'orifice pour gaz de suite (13) dans une plage entre 26 % et 28 %, et faire que la concentration en oxygène à alimenter à l'orifice pour gaz de suite (13) soit plus basse que celle de l'oxygène à alimenter depuis le générateur d'oxygène (10) vers le brûleur (12).

2. Système de chaudière à oxy-combustible selon la revendication 1, dans lequel l'orifice de prélèvement de gaz d'échappement (22) est disposé en aval de l'appareil de suppression de poussière à sec (4) et en aval d'un dispositif de refroidissement de suppression d'humidité (7).

3. Système de chaudière à oxy-combustible selon la revendication 1, dans lequel l'orifice de prélèvement de gaz d'échappement (22) est disposé en aval de l'appareil de suppression de poussière à sec (4) et en amont d'un premier dispositif de refroidissement de suppression d'humidité, et
un second dispositif de refroidissement de suppression d'humidité est prévu à mi-chemin sur le tube d'alimentation de gaz de recyclage (14).

4. Système de chaudière à oxy-combustible selon la revendication 1, qui comprend en outre :
un premier orifice de prélèvement de gaz d'échappement agencé dans le conduit (20) et disposé en aval d'un appareil de suppression de poussière à sec (4) et un second orifice de prélèvement de gaz d'échappement agencé dans le conduit (20) et disposé en aval d'un dispositif de refroidissement de suppression d'humidité (7) ;
le tube d'alimentation de gaz de recyclage (14) inclut une première ligne qui alimente des gaz d'échappement prélevés depuis le premier orifice de prélèvement de gaz d'échappement vers l'orifice de gaz de suite (13), et une seconde ligne qui alimente les gaz d'échappement prélevés depuis le second orifice de prélèvement de gaz d'échappement vers le brûleur (12).

5. Procédé pour commander un système de chaudière à oxy-combustible, comprenant :
un générateur d'oxygène (10) pour séparer l'oxygène de l'air ;
un broyeur à charbon (11) pour sécher et pulvériser du charbon ;
un brûleur (12) pour faire brûler le charbon séché et pulvérisé avec de l'oxygène généré dans le générateur d'oxygène (10) ;
un orifice pour gaz de suite (13) auquel est alimenté l'oxygène généré dans le générateur d'oxygène (10) ;
une chaudière (1) équipée du brûleur (12) et de l'orifice pour gaz de suite (13) sur sa paroi ;
un conduit (20) qui introduit des gaz d'échappement de combustion depuis la chaudière (1) vers l'extérieur ;
un tube d'alimentation de gaz recyclé (14) ayant un orifice de prélèvement de gaz d'échappement (22) disposé à mi-chemin du conduit (20) et alimentant des gaz d'échappement recyclés vers le broyeur à charbon (11), le brûleur (12) et l'orifice pour gaz de suite (13) ; et
un tube d'alimentation d'oxygène (16) qui alimente de l'oxygène depuis le générateur d'oxygène (10) à des tubes qui alimentent des gaz d'échappement vers le broyeur à charbon (11), le brûleur (12) et l'orifice pour gaz de suite (13) par le tube d'alimentation de gaz de recyclage, dans lequel
le tube d'alimentation de gaz de recyclage (14) comprend des régulateurs d'écoulement séparés qui régulent les débits des gaz d'échappement recyclés alimentés au broyeur à charbon (11), au brûleur (12) et à l'orifice pour gaz de suite (13), de manière indépendante,
le tube d'alimentation d'oxygène (16) comprend des régulateurs d'écoulements séparés qui régulent les débits d'oxygène alimentés au brûleur (12) et à l'orifice pour gaz de suite (13), de manière indépendante, dans lequel le procédé comprend les étapes consistant à :
prélever des gaz d'échappement depuis une position en aval d'un appareil de suppression de poussière à sec (4) agencé dans le conduit (20);
**caractérisé par** les étapes consistant à
fixer une concentration en oxygène alimenté depuis le générateur d'oxygène (10) à l'orifice pour gaz de suite (13) dans une plage entre 26 % et 28 % par l'appareil de commande d'oxygène (25) et faire que la concentration en oxygène à alimenter à l'orifice pour gaz de suite (13) soit plus faible que celle de l'oxygène à alimenter depuis le générateur d'oxygène (10) vers le brûleur (12).
